Europäisches Patentamt

European Patent Office

Office européen des brevets

(11) Veröffentlichungsnummer: **0 429 798 A1**

# EUROPÄISCHE PATENTANMELDUNG

(21) Anmeldenummer: 90118937.3

(51) Int. Cl.⁵: **A01D 85/00**, B65D 75/02

(22) Anmeldetag: 04.10.90

(30) Priorität: 01.12.89 DE 3939875

(43) Veröffentlichungstag der Anmeldung:
05.06.91 Patentblatt 91/23

(84) Benannte Vertragsstaaten:
AT BE DE DK FR GB IT NL SE Patentblatt

(71) Anmelder: Freihart, Josef

W-8431 Wissing 16(DE)

Anmelder: Bogner, Adalbert

Dorfstrasse 17
W-8431 Seubersdorf(DE)

(72) Erfinder: Freihart, Josef
Haus Nr. 16
W-8431 Wissing(DE)
Erfinder: Bogner, Adalbert
Dorfstr. 17
W-8431 Seubersdorf(DE)

(74) Vertreter: Göbel, Matthias, Dipl.-Ing.
Pruppacher Hauptstrasse 5-7
W-8501 Pyrbaum-Pruppach(DE)

(54) **Grosspressballen, insbesondere für Heu und/oder Stroh.**

(57) Bei einem Großpressballen, insbesondere für Heu und/oder Stroh, mit außen durch mehrere im Abstand unabhängig nebeneinander angeordneten Schnurabschnitten, die durch Verknoten der beiden jeweiligen Enden Bandagen bilden, sind zum rationellen Einbringen und handlichen Verteilen von Heu und Stroh eine Anzahl vermittels Schnüren (4) vorgebundene Kleinpressballen (3) vorgesehen, die in Reihe aneinander gestellt gemeinsam durch mehrere verknotete Außenschnüre (2) fest umfaßt sind.

Fig. 1

EP 0 429 798 A1

Xerox Copy Centre

## GROSSPRESSBALLEN, INSBESONDERE FÜR HEU UND/ODER STROH

Die Erfindung betrifft einen Großpressballen, insbesondere für Heu und/oder Stroh, mit außen durch mehrere im Abstand unabhängig nebeneinander angeordneten Schnurabschnitten, die durch Verknoten der beiden jeweiligen Enden Bandagen bilden.

Es ist bereits bekannt zur rationellen und mechanischen Einbringung von Ernten an Heu und/oder Stroh durch fahrbare Pressvorrichtungen Großpressballen anzufertigen und diese mittels Hebevorrichtungen auf Erntewagen abzulegen. Obwohl die Großpressballen ein schnelles und müheloses Einbringen des Erntegutes erlauben, bereitet ihr späterer Verbrauch wegen der Unhandlichkeit und des unkontrollierbaren Auseinanderfallens der Heu- oder Strohbestandteile nach dem Aufschneiden der Bindeschnüre Schwierigkeiten. Außerdem erfordert die Verteilung des Großpressballens an unabhängigen Verbrauchsplätzen den Transport von losen Heu- oder Strohmengen, was arbeitsaufwendig ist.

Es ist Aufgabe der Erfindung Maßnahmen zum rationellen Einbringen und zum handlichen Verteilen von Heu und/oder Stroh zu schaffen.

Der Erfindung gemäß ist diese Aufgabe gelöst durch eine Anzahl vermittels Schnüren vorgebundene Kleinpressballen, die in Reihe aneinander gestellt gemeinsam durch verknotete Außenschnüre fest umfaßt sind. Auf diese Weise ist die Möglichkeit gegeben, Kleinpressballen zu einem maschinell zu handhabenden Großpressballen zusammenzufassen und zum Gebrauch nach dem Auftrennen der Außenschnüre unabhängig voneinander zur Verfügung zu haben. Die Kleinpressballen sind danach getrennt einfach unabhängig zu handhaben und manuell sicher transportierbar.

In Ausgestaltung des Großpressballens ist vorgesehen, die Kleinpressballen in Längsrichtung des Großpressballens mit gleichen oder verschiedenen Längen auszubilden. Schießlich ist auch denkbar, die Kleinpressballen in ihren Längen veränderbar zu gestalten.

Gemäß einem Verfahren zum Herstellen der Großpressballen ist vorgesehen, daß die Heubestandteile im Pressenkanal nach Vorschüben von Teillängen des Großpressballens jeweils unabhängig voneinander vermittels zusätzlicher Knotenapparate und Schnurführungsnadeln durch Bindeschnüre zu Kleinpressballen vorgebunden werden, danach eine Anzahl Kleinpressballen in Reihe pressend aneinander gehalten und nachfolgend die Kleinpressballen gemeinsam gleichzeitig zu einem Großpressballen durch weitere Bindeschnüre umfaßt werden. Bevorzugt sind dabei die einem Großpressballen zugehörigen Kleinpressballen durch jeweils zwei Bindeschnurpaare umfaßt und zwischen jedem Bindeschnurpaar die Bindeschnüre für die Kleinpressballen angeordnet.

Schließlich ist bei einer Vorrichung zur Durchführung des Verfahrens noch vorgesehen, daß die Presse verschieden große Knotenapparatepaare mit zugeordneten Nadeln zur Führung von zwei im Querschnitt verschiedenen Bindeschnüren aufweist und daß zwischen den Knotenappa ratenpaaren mit Führungsnadeln für die im Querschnitt größeren Bindeschnüre jeweils ein Knotenapparat mit Führungsnadel für die im Querschnitt kleineren Bindeschnüre ausgebildet sind. Danach sind somit die bisher bekannten Großballenpressen die, z.B. jur Bindung der Heu- oder Strohbestandteile des Großballens vier Schnüre in Anwendung bringen, mit zwei zusätzlichen Knotenapparaten mit Führungsnadeln für die Bindung der Kleinpressballen zu ergänzen, wobei diese entsprechend den für die Kleinpressballen notwendigen niederen Vorspannungen bzw. Gewichten schwächer bzw. kleiner ausgelegt sein können. Zweckmäßig ist vorgesehen, daß die die Kleinpressballen gemeinsam umfassenden Bindeschnüre eine größere Festigkeit als die Bindeschnüre für die einzelnen Kleinpressballen aufweisen. Vorzugsweise sind die Bindeschnüre aus dem gleichen Werkstoff ausgebildet, wobei die die Kleinpressballen insgesamt umfassenden Bindeschnüre einen größeren Querschnitt als die Bindeschnüre für die einzelnen Kleinpressballen aufweisen. Es versteht sich, daß die Anzahl der Bindeschnüre für den Großpressballen bzw. Kleinpressballen beliebig gewählt sein kann.

Die Erfindung ist anhand eines Ausführungsbeispiels in der Zeichnung verdeutlicht. Es zeigen:

Fig. 1    einen Großpressballen in Seitenansicht,

Fig. 2    einen Großpressballen in Draufsicht,

Fig. 3    einen Großpressballen geöffnet, perspektivisch und

Fig. 4    ein Nadelbild einer Vorrichtung für die Bindeschnüre von Kleinpressballen und Großpressballen.

In den Fig. ist mit 1 ein Großpressballen für Heu und/oder Stroh bezeichnet. Der Großpressballen 1 ist außen durch, z.B. vier Außenschnüre 2 fest umfaßt deren Enden zur Bildung von Schnurringen bei 7 miteinander verknotet sind. Der Großpressballen 1 ist durch eine Anzahl unabhängiger Kleinpressballen 3 gebildet, die beim Ausführungsbeispiel in Längsrichtung verschieden große Längen aufweisen. Die Kleinpressballen 3 sind durch, z.B. zwei weitere, bei 6 verknotete Schnüre 4 vorgebunden. Nach pressendem Aneinanderstellen der Kleinpressballen und Aufbringen der Außenschnüre 2 sind die Kleinpressballen 3 gemeinsam zu einem Großpressballen verbunden.

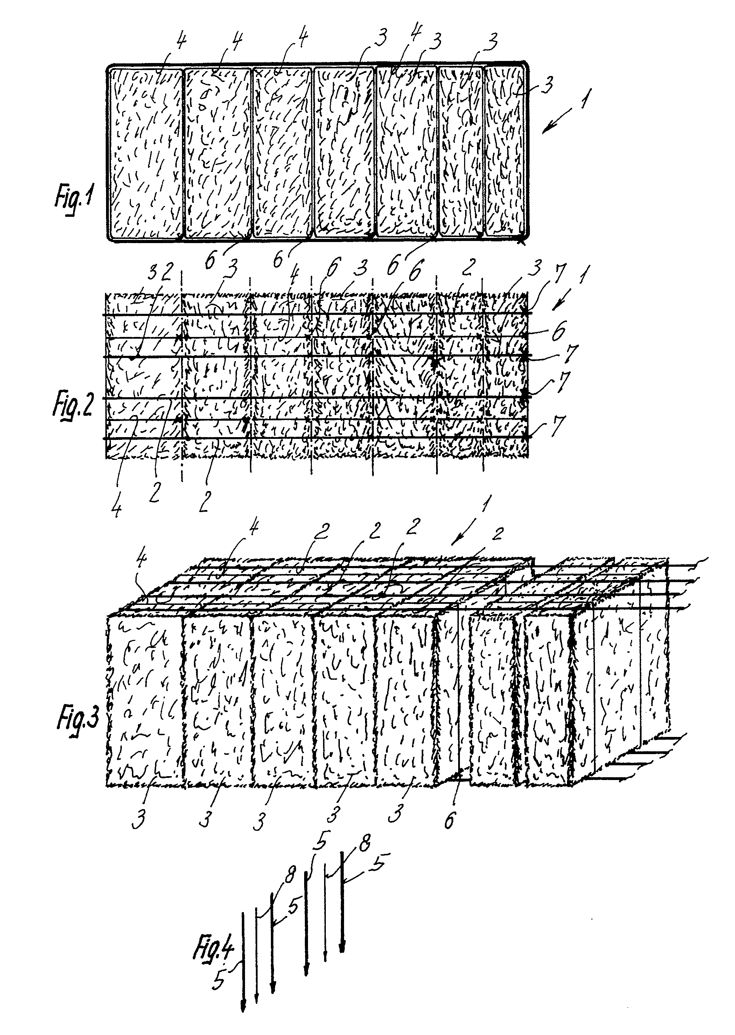

Durch Aufschneiden der Außenschnüre 2 (Fig. 3) stehen die Kleinpressballen 3 als einzelne unabhängige Preßeinheiten zur Verfügung, die je für sich und unabhängig voneinander gehandhabt und transportierbar sind.

Die Fig. 4 läßt erkennen, daß die Vorrichtung zur Bindung der Kleinpressballen 3 zusätzlich zu den Führungsnadeln 5 der Knotenapparate (nicht gezeigt) für die Außenschnüre 2 weitere Führungsnadeln 8 der Knotenapparate (nicht gezeigt) für die Bindung der Schnüre 4 erfordert.

## Ansprüche

1. Großpressballen, insbesondere für Heu und/oder Stroh, mit außen durch mehrere im Abstand unabhängig nebeneinander angeordneten Schnurabschnitten, die durch Verknoten der beiden jeweiligen Enden Bandagen bilden, gekennzeichnet durch eine Anzahl vermittels Schnüren (4) vorgebundene Kleinpressballen (3), die in Reihe aneinander gestellt gemeinsam durch mehrere verknotete Außenschnüre (2) fest umfaßt sind.

2. Großpressballen nach Anspruch 1, dadurch gekennzeichnet, daß die Kleinpressballen (3) in Längsrichtung des Großpressballens (1) mit gleichen Längen ausgebildet sind.

3. Großpressballen nach Anspruch 1, dadurch gekennzeichnet, daß die Kleinpressballen (3) in Längsrichtung des Großpressballens (1) verschieden lang ausgebildet sind.

4. Großpressballen nach Anspruch 1, dadurch gekennzeichnet, daß die Kleinpressballen (3) in Längsrichtung des Großpressballens (1) in ihren Längen veränderbar sind.

5. Verfahren zum Herstellen von Großpressballen für Heu und/oder Stroh auf Pressen, bei dem die Heu- bzw. Strohbestandteile in einem Pressenkanal verdichtet und vermittels Knotenapparaten mit quer oder bogenförmig zur Verschieberichtung der Heubestandteile im Pressenkanal geführten Nadeln für die Bindeschnüre gebunden werden, dadurch gekennzeichnet, daß die Heubestandteile im Pressenkanal nach Vorschüben von Teillängen des Großpressballens jeweils unabhängig voneinander vermittels zusätzlicher Knotenapparate und Führungsnadeln durch Bindeschnüre zu Kleinpressballen vorgebunden, eine Anzahl Kleinpressballen in Reihe pressend aneinander gehalten und nachfolgend die Kleinpressballen gemeinsam gleichzeitig zu einem Großpressballen durch weitere Bindeschnüre umfaßt werden.

6. Verfahren nach Anspruch 5, dadurch gekennzeichnet, daß die einem Großpressballen zugehörigen Kleinpressballen durch zwei Bindeschnurpaare umfaßt werden und daß sich zwischen jedem Bindeschnurpaar die Bindeschnüre für die Kleinpressballen erstrecken.

7. Vorrichtung zur Durchführung des Verfahrens nach Anspruch 5 und 6, dadurch gekennzeichnet, daß die Presse verschieden große Knotenapparatepaare mit zugeordneten Nadeln (5,8) für die Führung von zwei im Querschnitt verschiedenen Bindeschnüren (2,4) aufweist und daß zwischen jedem Knotenapparatenpaar mit Führungsnadeln (5) für die im Querschnitt größeren Bindeschnüre (2) jeweils ein Knotenapparat mit Führungsnadel (8) für die im Querschnitt kleineren Bindeschnüre (4) ausgebildet sind.

8. Vorrichtung nach Anspruch 7, dadurch gekennzeichnet, daß die eine Anzahl Kleinpressballen (3) gemeinsam umfassenden Bindeschnüre (2) eine größere Festigkeit als die Bindeschnüre (4) für die einzelnen Kleinpressballen (3) aufweisen.

9. Vorrichtung nach Anspruch 7, dadurch gekennzeichnet, daß die Bindeschnüre (2,4) aus dem gleichen Werkstoff ausgebildet sind und daß die eine Anzahl Kleinpressballen (3) umfassenden Bindeschnüre (2) einen größeren Querschnitt als die Bindeschnüre (4) fur die einzelnen Kleinpressballen (3) aufweisen.

Fig.1

Fig.2

Fig.3

Fig.4

Europäisches
Patentamt

**EUROPÄISCHER
RECHERCHENBERICHT**

Nummer der Anmeldung

**EP 90 11 8937**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 269 116 (GORDON ET AL.)<br>* Spalte 3, Zeilen 39 - 46 * * Spalte 4, Zeilen 7 - 38; Figur 1 *<br>— — — | 1,5,7 | A 01<br>D 85/00<br>B 65 D 75/02 |
| A | FR-A-2 394 977 (TER BORG & MENSINGA'S MACHINE-FABRIEK)<br>* Figur 1 *<br>— — — | 1,2,5 | |
| A | DE-A-3 439 035 (EGGENMÜLLER)<br>— — — — — | | |
| | | | **RECHERCHIERTE SACHGEBIETE (Int. Cl.5)**<br><br>A 01 D<br>A 01 F<br>B 65 D |

Der vorliegende Recherchenbericht wurde für alle Patentansprüche erstellt

| Recherchenort | Abschlußdatum der Recherche | Prüfer |
|---|---|---|
| Berlin | 07 März 91 | SPETTEL J D M L |

**KATEGORIE DER GENANNTEN DOKUMENTE**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
------------------------------------------------
& : Mitglied der gleichen Patentfamilie, übereinstimmendes Dokument